(19) Europäisches Patentamt
European Patent Office
Office européen des brevets

(11) EP 4 098 664 A1

(12) **EUROPEAN PATENT APPLICATION**
published in accordance with Art. 153(4) EPC

(43) Date of publication:
**07.12.2022 Bulletin 2022/49**

(21) Application number: **21747921.1**

(22) Date of filing: **21.01.2021**

(51) International Patent Classification (IPC):
***C08C 1/00*** (2006.01) ***B60C 1/00*** (2006.01)
***C08K 3/013*** (2018.01) ***C08K 5/00*** (2006.01)
***C08L 7/02*** (2006.01) ***C08L 9/00*** (2006.01)

(52) Cooperative Patent Classification (CPC):
**B60C 1/00; C08C 1/00; C08K 3/013; C08K 5/00; C08L 7/00; C08L 7/02; C08L 9/00;** Y02W 30/62

(86) International application number:
**PCT/JP2021/002051**

(87) International publication number:
**WO 2021/153415 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.01.2020 JP 2020010866**

(71) Applicant: **Sumitomo Rubber Industries, Ltd.**
**Kobe-shi, Hyogo 651-0072 (JP)**

(72) Inventors:
- **MIYAJI, Daiki**
**Kobe-shi, Hyogo 651-0072 (JP)**
- **KANYAWARARAK, Kamalin**
**Kobe-shi, Hyogo 651-0072 (JP)**

(74) Representative: **TBK**
**Bavariaring 4-6**
**80336 München (DE)**

(54) **MODIFIED NATURAL RUBBER AND RUBBER COMPOSITION**

(57) The present invention provides a modified natural rubber providing excellent odor reduction and degradation resistance while being made from a solid raw material such as cup lump, and a rubber composition and a tire each containing the modified natural rubber. The present invention relates to a modified natural rubber produced from (1) a solid raw material obtained from a natural rubber latex combined with an antiseptic disinfectant, and/or (2) a solid raw material obtained by adding an antiseptic disinfectant to a coagulum of a natural rubber latex, wherein the antiseptic disinfectant is at least one selected from the group consisting of triazines, parabens, boric acids, glycol ethers, and organic acids having a pKa of 4 or higher and metal salts thereof.

EP 4 098 664 A1

## Description

TECHNICAL FIELD

The present invention relates to a modified natural rubber, and a rubber composition and a tire each containing the modified natural rubber.

BACKGROUND ART

In general, natural rubber is produced by solidifying sap (latex) extracted from rubber trees called *Hevea brasiliensis* by a solidifying method such as by coagulating the latex using an acid such as formic acid, sheeting the coagulum, and drying the sheet to produce the natural rubber, or by allowing the latex to naturally coagulate in a latex collection cup or coagulating the latex with an acid added to the cup to obtain cup lump, and subjecting the cup lump to repeated milling and washing, followed by drying and then pressing to produce the natural rubber.

Since the thus produced natural rubber contains a large amount of non-rubber components such as proteins, lipids, and saccharides, these non-rubber components can decay during the storage period of the raw material or can be degraded by thermal decomposition during the drying step, emitting offensive odors. Particularly in the case of cup lump, the odor problem is more likely to occur because the cup lump contains a large amount of non-rubber components, and it may be stored for a long period of time including a storage period at a plantation and storage and transportation periods at a processing plant. Nevertheless, natural rubber made from cup lump has been widely used owing to its easy production and cost, and the use of the natural rubber has been considered problematic in natural rubber processing plants and factories for manufacturing rubber products such as tires due to the problems caused by the odor of decayed natural rubber such as deterioration of the working environment and impact on the surrounding environment.

Patent Literatures 1 and 2 disclose methods which include micronizing or sheeting cup lump (natural rubber raw material) to reduce the moisture content, or lowering the drying temperature thereof, thereby inhibiting decomposition of non-rubber components to reduce odors. However, these methods can reduce but not completely eliminate the activity of bacteria and microorganisms, and there is a concern that, when the storage period is prolonged, odor substances may be gradually generated.

Patent Literature 3 discloses a method for producing a modified natural rubber latex by enzymatically treating a natural rubber latex combined with a preservative. This production method is a method which adds a preservative to inhibit coagulation of latex in a liquid state and thereby allow the enzymatic treatment of the liquid latex in a post-process to smoothly proceed, and does not include addition to a solid material such as cup lump. Moreover, this method also has problems in that the enzymatic treatment can cause decomposition of non-rubber components having an anti-aging effect, resulting in poor degradation resistance, and that it can cause scission of the main chain of natural rubber to reduce the molecular weight, resulting in lower abrasion resistance.

CITATION LIST

PATENT LITERATURE

Patent Literature 1: JP 2018-58975 A
Patent Literature 2: JP 2018-199790 A
Patent Literature 3: JP 5364231 B

SUMMARY OF INVENTION

TECHNICAL PROBLEM

The present invention aims to solve the above problems and provide a modified natural rubber providing excellent odor reduction and degradation resistance while being made from a solid raw material such as cup lump, and a rubber composition and a tire each containing the modified natural rubber.

SOLUTION TO PROBLEM

The present invention relates to a modified natural rubber, produced from at least one solid raw material selected from the group consisting of: (1) a solid raw material obtained from a natural rubber latex combined with an antiseptic

disinfectant; and (2) a solid raw material obtained by adding an antiseptic disinfectant to a coagulum of a natural rubber latex, the antiseptic disinfectant being at least one selected from the group consisting of triazines, parabens, boric acids, glycol ethers, and organic acids having a pKa of 4 or higher and metal salts thereof.

The antiseptic disinfectant is preferably at least one selected from the group consisting of boric acids, glycol ethers, and organic acids having a pKa of 4 or higher and metal salts thereof.

In the modified natural rubber, the antiseptic disinfectant is preferably added in an amount of 0.01 to 10 parts by mass per 100 parts by mass of a rubber solid content of the natural rubber latex.

The modified natural rubber is preferably produced by bringing the solid raw material into contact with a basic solution.

The present invention relates to a rubber composition, containing at least one rubber component including the modified natural rubber.

The rubber component preferably further includes a polybutadiene rubber.

The rubber composition preferably has a filler content of 5 to 150 parts by mass per 100 parts by mass of a rubber component content.

The rubber composition preferably has an odor component index of $5.0 \times 10^5$ or lower.

The present invention also relates to a tire, including a tire component containing the rubber composition.

## ADVANTAGEOUS EFFECTS OF INVENTION

The modified natural rubber according to the present invention is produced from (1) a solid raw material obtained from a natural rubber latex combined with an antiseptic disinfectant, and/or (2) a solid raw material obtained by adding an antiseptic disinfectant to a coagulum of a natural rubber latex, wherein the antiseptic disinfectant is at least one selected from the group consisting of triazines, parabens, boric acids, glycol ethers, and organic acids having a pKa of 4 or higher and metal salts thereof. Thus, the present invention provides a modified natural rubber, a rubber composition, and a tire which are excellent in odor reduction and degradation resistance.

## DESCRIPTION OF EMBODIMENTS

### (Modified natural rubber)

The modified natural rubber of the present invention is produced from (1) a solid raw material obtained from a natural rubber latex combined with an antiseptic disinfectant, and/or (2) a solid raw material obtained by adding an antiseptic disinfectant to a coagulum of a natural rubber latex. Further, the antiseptic disinfectant is at least one selected from the group consisting of triazines, parabens, boric acids, glycol ethers, and organic acids having a pKa of 4 or higher and metal salts thereof. Although the natural rubber is produced using a solid raw material as a raw material, the natural rubber is excellent in odor reduction and degradation resistance.

The odor of natural rubber is considered to be due to odor-causing substances, including lower fatty acids and other odor substances, generated by decay of non-rubber components such as proteins, lipids, and saccharides in natural rubber during storage, or decomposition thereof during drying. It is also considered that such decayed proteins and saccharides are present in the moisture in the natural rubber or in the gaps within the rubber component. The present invention is based on the following finding: when a natural rubber is made from a solid raw material obtained from a natural rubber latex combined with at least one antiseptic disinfectant selected from the group consisting of triazines, parabens, boric acids, glycol ethers, and organic acids having a pKa of 4 or higher and metal salts thereof, and/or a solid raw material obtained by adding at least one antiseptic disinfectant selected from the group consisting of triazines, parabens, boric acids, glycol ethers, and organic acids having a pKa of 4 or higher and metal salts thereof to a coagulum of a natural rubber latex, it is possible to kill bacteria or microorganisms attached to the raw material during the storage of the raw material, or reduce the physiological activity and inhibit the growth thereof to reduce the activity thereof, so that decomposition of non-rubber components can be inhibited to reduce generation of natural rubber odor-causing substances including lower fatty acids and other odor substances. Moreover, although natural rubber originally also contains natural antioxidants such as tocotrienols, and these substances are also considered as being decomposed by bacteria, the modified natural rubber also has excellent aging resistance as the antiseptic disinfectant also inhibits decomposition of the natural antioxidants such as tocotrienols. Thus, the modified natural rubber provided herein is excellent in both odor reduction and degradation resistance even though it is a natural rubber made from a solid raw material such as cup lump.

The modified natural rubber is produced from at least one solid raw material (raw material in a solid state) selected from the group consisting of (1) a solid raw material obtained from a natural rubber latex combined with an antiseptic disinfectant, and (2) a solid raw material obtained by adding an antiseptic disinfectant to a coagulum of a natural rubber latex. Further, the antiseptic disinfectant is at least one selected from the group consisting of triazines,

parabens, boric acids, glycol ethers, and organic acids having a pKa of 4 or higher and metal salts thereof.

Typical examples of natural rubber include ribbed smoked sheet (RSS) and technically specified rubber (TSR) produced by two production methods, respectively. RSS is produced by tapping, followed by adding an acid or the like to the extracted natural rubber latex to coagulate the rubber component, and smoke-drying (smoking) the solid rubber. TSR is produced by tapping, followed by natural coagulation or acid coagulation (cup lump) of the rubber component of a natural rubber latex, milling, washing with water, dehydration, and then drying of the solid rubber. Thus, examples of the solid raw material (1) or (2) include a solid material produced by adding the antiseptic disinfectant to a natural rubber latex before coagulation and coagulating the mixture; and a solid material produced by adding the antiseptic disinfectant to a cup lump obtained by natural coagulation or acid coagulation of the rubber component of a natural rubber latex.

Examples of usable natural rubber latexes include conventionally known ones such as raw latex extracted from rubber trees by tapping (field latex), and concentrated latex obtained by concentration via centrifugation or creaming (e.g., purified latex, high ammonia latex combined with ammonia by an ordinary method, LATZ latex stabilized with zinc oxide, TMTD, and ammonia).

The antiseptic disinfectant used for the solid material (1) or (2) is an agent having a disinfecting effect used to kill bacteria and microorganisms, or a preservative added to reduce the physiological activity of bacteria and microorganisms and inhibit the growth thereof for the purpose of preserving products. The use of the antiseptic disinfectant makes it possible to kill bacteria or microorganisms attached to the raw material during the storage of the raw material, or reduce the physiological activity and inhibit the growth thereof to reduce the activity thereof, so that decomposition of non-rubber components can be inhibited to reduce odors and also to reduce a decrease in degradation resistance.

The antiseptic disinfectant has a disinfecting effect or an antiseptic effect against bacteria and microorganisms and is at least one selected from the group consisting of triazines, parabens (paraoxybenzoic acid esters), boric acids, glycol ethers, and organic acids having a pKa of 4 or higher and metal salts thereof. Among these, boric acids, glycol ethers, and organic acids having a pKa (acid dissociation constant) of 4 or higher and metal salts thereof are preferred from the standpoints of odor reduction and degradation resistance.

Usable triazines are those having a disinfecting effect or an antiseptic effect against bacteria and microorganisms, and examples thereof include 1,3,5-triazine, ametryn, atrazine, cyanazine, desmetryn, dimethametryn, prometon, prometryn, propazine, simazine, simetryn, terbumeton, terbuthylazine, terbutryn, triethazine, and anilazine.

Usable parabens (paraoxybenzoic acid esters) are those having a disinfecting effect or an antiseptic effect against bacteria and microorganisms, and examples thereof include methylparaben, ethylparaben, propylparaben, butylparaben, isopropylparaben, and isobutylparaben.

Usable boric acids are those having a disinfecting effect or an antiseptic effect against bacteria and microorganisms, and examples thereof include orthoboric acid, metaboric acid, and tetraboric acid.

Usable glycol ethers are those having a disinfecting effect or an antiseptic effect against bacteria and microorganisms, and examples thereof include phenoxyethanol, phenoxypropanol, and phenoxyisopropanol.

Usable organic acids having a pKa of 4 or higher and metal salts thereof are those having a disinfecting effect or an antiseptic effect against bacteria and microorganisms. Examples of the organic acids having a pKa of 4 or higher include benzoic acid, sorbic acid, dehydroacetic acid, gluconic acid, ascorbic acid, succinic acid, tartaric acid, citric acid, acetic acid, formic acid, and oxalic acid. Examples of the metal salts of organic acids having a pKa of 4 or higher include metal salts of the foregoing organic acids (e.g., alkali metal salts such as sodium salts and potassium salts, alkaline earth metal salts such as calcium salts), such as sodium benzoate, potassium sorbate, sodium dehydroacetate, sodium citrate, sodium acetate, sodium formate, and sodium oxalate.

The solid raw material (1) obtained from a natural rubber latex combined with the antiseptic disinfectant may be produced by coagulating (aggregating) a natural rubber latex combined with the antiseptic disinfectant to form a solid material (coagulated rubber).

The natural rubber latex combined with the antiseptic disinfectant may be produced by a known mixing method capable of mixing a natural rubber latex and the antiseptic disinfectant. The antiseptic disinfectant to be mixed may be, for example, a solution or dispersion in which the antiseptic disinfectant is dissolved in a solvent such as water and the concentration thereof is appropriately adjusted.

The coagulation (aggregation) may be carried out, for example, by adding an acid such as formic acid, acetic acid, or sulfuric acid to adjust the pH, optionally followed by adding a polymer coagulant. The pH is preferably adjusted to a range of 3.0 to 5.0, more preferably 3.5 to 4.5. Examples of the polymer coagulant include cationic polymer coagulants such as poly(dimethylaminoethyl (meth)acrylate methyl chloride quaternary salt), anionic polymer coagulants such as polymers of acrylic acid salts, nonionic polymer coagulants such as acrylamide polymers, and amphoteric polymer coagulants such as copolymers of dimethylaminoethyl (meth)acrylate methyl chloride quaternary salt and acrylic acid salts. The amount of the polymer coagulant added may be appropriately adjusted.

In the solid raw material (2) obtained by adding the antiseptic disinfectant to a coagulum of a natural rubber latex, the coagulum (coagulated rubber) of a natural rubber latex may be produced by coagulating (aggregating) a natural rubber latex by the aforementioned coagulation (aggregation) method. Then, the solid raw material may be produced

by a known mixing method capable of mixing the resulting coagulum of a natural rubber latex and the antiseptic disinfectant. The antiseptic disinfectant to be mixed may be the aforementioned solution or dispersion, for example.

From the standpoint of odor reduction, the amount of the antiseptic disinfectant added in the production of the solid raw material (1) or (2) is preferably 0.01 parts by mass or more, more preferably 0.03 parts by mass or more, still more preferably 0.05 parts by mass or more, further more preferably 0.1 parts by mass or more, particularly preferably 0.3 parts by mass or more, more particularly preferably 0.5 parts by mass or more, most preferably 1 part by mass or more, per 100 parts by mass of the rubber solid content of the natural rubber latex. The upper limit of the amount is not limited, but is preferably 10 parts by mass or less, more preferably 7 parts by mass or less, still more preferably 5 parts by mass or less, from the standpoint of economic efficiency.

Then, the solid raw material (water-containing coagulum) (1) or (2) produced as described above may optionally be washed and dried to produce a modified natural rubber. The solid raw materials (1) and (2), which are produced from a natural rubber latex and the above-described antiseptic disinfectant, can be inhibited from decaying and provide odor reduction, even when stored for a long period of time. The modified natural rubber produced therefrom also provides odor reduction.

The washing step is not limited, and known washing methods may be applied. Examples include a method in which a solid raw material is diluted with water and then centrifuged, a method in which a solid raw material is left to float in a water bath and only the aqueous phase is discharged, and a method in which a solid raw material is washed while being stirred in a water bath and only the aqueous phase is discharged. Here, the solid raw material to be subjected to the washing step may be either in the form of a coagulum as it is or a crushed product obtained by cutting and crushing it into any appropriate size.

The drying step is not limited and known drying techniques may be used. The drying temperature is preferably 140°C or lower. This can inhibit the generation of lower fatty acids due to decomposition of non-rubber components and provide odor reduction. The drying temperature is more preferably 135°C or lower, still more preferably 130°C or lower, further more preferably 125°C or lower, particularly preferably 120°C or lower. The lower limit is not limited, but is preferably 75°C or higher, more preferably 80°C or higher, still more preferably 100°C or higher, from the standpoint of productivity. The drying time may be selected appropriately according to the drying temperature and drying conditions.

Here, if an enzymatic treatment is performed in the course of producing a modified natural rubber, this presents problems in that the enzymatic treatment can cause decomposition of non-rubber components having an anti-aging effect, resulting in poor degradation resistance, and that it can cause scission of the main chain of natural rubber to reduce the molecular weight, resulting in lower abrasion resistance. Thus, no enzymatic treatment is preferably performed.

Before the washing step, the solid raw material (water-containing coagulum) (1) or (2) may be subjected to a dehydration step of reducing the moisture content thereof. This step can remove odor-causing substances together with the moisture and provide odor reduction.

In the dehydration step, the method for reducing the moisture content of the solid raw material (water-containing coagulum) is not limited as long as it is a method capable of reducing the moisture content of the solid raw material. From the standpoint of also removing the moisture within the solid raw material, a method of squeezing a solid raw material (e.g., a method of compressing a solid raw material) is preferred. An example of a method of squeezing a solid raw material includes passing and compressing a solid raw material between rolls such as milling rolls. A creeper may be used as a device for passing and compressing a water-containing coagulum between rolls.

When a solid raw material (water-containing coagulum) is compressed between rolls, the compressed solid raw material has a relatively flat shape. From the standpoint of productivity, the thickness of the compressed solid raw material is preferably 3 mm or greater, more preferably 5 mm or greater, still more preferably 8 mm or greater. Moreover, from the standpoint of the effect provided by the dehydration step, the upper limit is preferably 3 cm or smaller, more preferably 2 cm or smaller.

From the standpoint of inhibiting the progress of decay during storage, the moisture content of the solid raw material (water-containing coagulum) after the dehydration step is preferably 30% or less, more preferably 25% or less, still more preferably 20% or less, further more preferably 15% or less. The lower limit is not limited and a lower moisture content is preferred, but from the standpoint of efficiency in adjusting the moisture content, the moisture content is preferably 3% or more, more preferably 5% or more, still more preferably 10% or more. Here, the moisture content can be determined from the weight difference before and after drying of the solid raw material (water-containing coagulum) after the dehydration step.

For example, when a creeper is used to reduce the moisture content of the solid raw material (water-containing coagulum), the number of passes through the creeper is preferably 4 or less, more preferably 3 or less, and even a single pass can provide a sufficient odor-improving effect. Five or more passes can result in lower efficiency for removing the moisture and thus in a smaller odor-improving effect relative to the number of steps. In general, when the number of passes through the creeper is one, the moisture content of the passed solid raw material (water-containing coagulum) will be 30% or less, while when the number of passes through the creeper is three, the moisture content of the passed solid raw material (water-containing coagulum) will be 20% or less. On the other hand, when the number of passes

through the creeper is five, the moisture content of the passed water-containing coagulum will be reduced to 10% or less.

Before the washing step, the solid raw material (water-containing coagulum) may be further subjected to a base treatment step of bringing the solid raw material into contact with a basic solution, in addition to the dehydration step. In other words, the dehydration step is preferably followed by a base treatment step of bringing the solid raw material (water-containing coagulum) obtained by the dehydration step into contact with a basic solution. Even when the solid raw material is stored after the dehydration step, the generation of lower fatty acids, which are odor-causing substances, can be reduced, but not completely eliminated. In contrast, by bringing the stored solid raw material (water-containing coagulum) into contact with a basic solution, it is possible to neutralize and remove a small amount of lower fatty acids generated, providing odor reduction. Here, when the solid raw material (water-containing coagulum) is to be brought into contact with a basic solution in the base treatment step, it may be either in the form of a coagulum (solid raw material) as it is or a crushed product obtained by cutting and crushing it into any appropriate size.

In the base treatment step, the solid raw material (water-containing coagulum) may be brought into contact with a basic solution, for example, by applying the basic solution to the solid raw material, or spraying the basic solution onto the solid raw material using a sprayer, a shower, or other means, or immersing the solid raw material in the basic solution. The method of immersing the solid raw material in the basic solution is preferred from the standpoints of a deodorizing effect and efficiency. The method of immersing the solid raw material in the basic solution can be carried out by leaving the solid raw material in the basic solution. In addition, stirring and/or microwave irradiation may be performed during the immersion to promote the deodorizing effect.

The duration of contact (treatment time) between the solid raw material (water-containing coagulum) and the basic solution is not limited, but is preferably 5 minutes or more, more preferably 10 minutes or more, still more preferably 30 minutes or more, particularly preferably 3 hours or more, from the standpoint of an odor-reducing effect. The upper limit is not limited because it also depends on the pH and concentration of the basic solution, but from the standpoint of productivity, it is preferably 48 hours or less, more preferably 24 hours or less, still more preferably 16 hours or less, particularly preferably 6 hours or less.

The temperature of contact (treatment temperature) between the solid raw material (water-containing coagulum) and the basic solution is not limited, but is, for example, preferably 10 to 50°C, more preferably 15 to 35°C, particularly preferably room temperature (20 to 30°C).

The basic solution is not limited as long as it is a solution that has basic properties, but may suitably be a solution containing at least one basic substance (basic inorganic substance) selected from the group consisting of metal carbonates, metal hydrogen carbonates, metal phosphates, and ammonia. In this case, it is possible to well neutralize and remove odor components, providing odor reduction, and also to prevent a reduction in physical properties such as heat-aging resistance. Examples of the basic solution include an aqueous solution containing the basic substance and an alcoholic solution containing the basic substance, with the aqueous solution containing the basic substance being preferred. Here, the basic solution can be prepared by diluting and dissolving the basic substance in a solvent such as water or alcohol.

Examples of the metal carbonates include alkali metal carbonates such as lithium carbonate, sodium carbonate, and potassium carbonate; and alkaline earth metal carbonates such as magnesium carbonate, calcium carbonate, and barium carbonate. Examples of the metal hydrogen carbonates include alkali metal hydrogen carbonates such as lithium hydrogen carbonate, sodium hydrogen carbonate, and potassium hydrogen carbonate. Examples of the metal phosphates include alkali metal phosphates such as sodium phosphate and sodium hydrogen phosphate. These may be used alone or in combinations of two or more. Preferred among these are metal carbonates, metal hydrogen carbonates, and ammonia, with alkali metal carbonates, alkali metal hydrogen carbonates, and ammonia being more preferred, with sodium carbonate, potassium carbonate, sodium hydrogen carbonate, and potassium hydrogen carbonate being still more preferred, with sodium carbonate and sodium hydrogen carbonate being particularly preferred.

From the standpoint of neutralization and removal of odor components, the basic substance concentration in the basic solution is preferably 0.1% by mass or more, more preferably 0.3% by mass or more, still more preferably 0.5% by mass or more, particularly preferably 1.0% by mass or more, based on 100% by mass of the basic solution. From the standpoints of economic efficiency and retention of rubber physical properties (e.g., heat-aging resistance) after the treatment, the upper limit of the concentration is preferably 20% by mass or less, more preferably 10% by mass or less, still more preferably 5.0% by mass or less, particularly preferably 3.0% by mass or less.

From the standpoint of neutralization and removal of odor components, the basic solution is preferably a solution further containing a surfactant in addition to the basic substance. The surfactant used may be at least one selected from the group consisting of anionic surfactants, nonionic surfactants, and amphoteric surfactants. Examples of the anionic surfactants include carboxylic acid anionic surfactants, sulfonic acid anionic surfactants, sulfate anionic surfactants, and phosphate anionic surfactants. Examples of the nonionic surfactants include polyoxyalkylene ester nonionic surfactants, polyhydric alcohol fatty acid ester nonionic surfactants, glycolipid ester nonionic surfactants, and alkyl polyglycoside nonionic surfactants. Examples of the amphoteric surfactants include amino acid type amphoteric surfactants, betaine type amphoteric surfactants, and amine oxide type amphoteric surfactants. Preferred among these are anionic surfactants. These may be used alone or in combinations of two or more.

Specific examples of suitable anionic surfactants include alkyl sulfate salts, polyoxyethylene alkyl ether sulfate salts, alkylbenzenesulfonic acid salts, alkylnaphthalenesulfonic acid salts, and fatty acid salts. Examples of these salts include alkali metal salts (e.g., sodium salts), ammonium salts, and amine salts (alkanolamine salts such as monoethanolamine, diethanolamine, and triethanolamine salts). Particularly preferred among these are polyoxyethylene alkyl ether sulfate salts.

Suitable alkyl sulfate salts include higher alkyl sulfate salts (higher alcohol sulfate salts), with alkali metal salts such as sodium salts being preferred. Moreover, the number of carbon atoms in the alkyl group of the alkyl sulfate salts is preferably 10 to 20, more preferably 10 to 16. Specific examples of the alkyl sulfate salts include sodium lauryl sulfate (sodium dodecyl sulfate), potassium lauryl sulfate, ammonium lauryl sulfate, triethanolamine lauryl sulfate, sodium myristyl sulfate, potassium myristyl sulfate, sodium cetyl sulfate, and potassium cetyl sulfate. Preferred among these is sodium lauryl sulfate because it has a higher effect in reducing the amount of proteins and the like.

Preferred polyoxyethylene alkyl ether sulfate salts include polyoxyethylene alkyl ether sulfate salts containing alkyl groups with a carbon number of 10 to 18, among which amine salts and sodium salts are more preferred, with sodium salts being still more preferred. The carbon number is preferably 10 to 14, more preferably 10 to 12. Moreover, the average degree of polymerization of oxyethylene groups is preferably 1 to 10, more preferably 1 to 5, still more preferably 1 to 2. Specific examples include sodium polyoxyethylene alkyl ether sulfates such as sodium polyoxyethylene lauryl ether sulfate, sodium polyoxyethylene myristyl ether sulfate, and sodium polyoxyethylene oleyl ether sulfate; and triethanolamine polyoxyethylene alkyl ether sulfates. Preferred among these is sodium polyoxyethylene lauryl ether sulfate because it has a higher effect in reducing the amount of proteins and the like.

Examples of alkylbenzenesulfonic acid salts include alkylbenzenesulfonic acid salts containing C3-C20 alkyl groups, among which alkali metal salts are suitable. Specific examples include sodium salts, potassium salts, ammonium salts, triethanolamine salts, and calcium salts of dodecylbenzenesulfonic acid, pentadecylbenzenesulfonic acid, decylbenzenesulfonic acid, and cetylbenzenesulfonic acid. Preferred among these is sodium dodecylbenzenesulfonate because it has a higher effect in reducing the amount of proteins and the like.

Examples of alkylnaphthalenesulfonic acid salts include alkylnaphthalenesulfonic acid alkali metal salts such as sodium mono-, di-, or triisopropylnaphthalenesulfonate, potassium mono-, di-, or triisopropylnaphthalenesulfonate, sodium octylnaphthalenesulfonate, potassium octylnaphthalenesulfonate, sodium dodecylnaphthalenesulfonate, and potassium dodecylnaphthalenesulfonate. Preferred among these are sodium alkylnaphthalenesulfonates because they have a higher effect in reducing the amount of proteins and the like.

Suitable fatty acid salts include C10-C20 higher fatty acid salts, examples of which include sodium salts and potassium salts. Specific examples include sodium salts and potassium salts of oleic acid, stearic acid, octanoic acid, decanoic acid, dodecanoic acid, tetradecanoic acid, hexadecanoic acid, octadecanoic acid, docosanoic acid, linoleic acid, 2-ethylhexanoic acid, and 2-octylundecanoic acid; and sodium salts and potassium salts of mixed fatty acids derived from coconut oil, palm oil, castor oil, palm kernel oil, beef tallow, and others (e.g., castor oil potassium soap). Preferred among these is potassium oleate soap because it has a higher effect in reducing the amount of proteins and the like.

From the standpoint of neutralization and removal of odor components, the surfactant concentration in the basic solution is preferably 0.01% by mass or more, more preferably 0.03% by mass or more, still more preferably 0.05% by mass or more, based on 100% by mass of the basic solution. From the standpoint of economic efficiency, the upper limit of the concentration is preferably 5.0% by mass or less, more preferably 3.0% by mass or less, still more preferably 1.0% by mass or less.

The base-treated water-containing coagulum obtained by the base treatment step may be subjected to a pH adjustment step of adjusting the pH thereof to 2 to 7. In other words, after the treatment with the basic solution, optionally followed by the washing step, the pH of the treated water-containing coagulum may further be adjusted to 2 to 7. The pH is preferably adjusted to a range of 3 to 6, more preferably 4 to 6. The pH adjustment allows the deodorizing effect to last long and can also prevent a reduction in heat-aging resistance.

Here, the pH is determined by cutting the base-treated water-containing coagulum (5 g) into pieces at most 2 mm square on each side, immersing the pieces in distilled water, irradiating the immersed pieces with microwaves for extraction at 90°C for 15 minutes, and measuring the resulting immersion water with a pH meter. Regarding the extraction, it should be noted that one-hour extraction using, e.g., an ultrasonic washing device cannot completely extract water-soluble components from inside the rubber and thus cannot accurately reveal the pH of the inside. In contrast, extraction using the microwave-based extraction technique can reveal the real nature (pH) of the treated water-containing coagulum.

In the pH adjustment step, the pH of the base-treated water-containing coagulum may be adjusted to 2 to 7, for example, by exposing the base-treated water-containing coagulum to an acidic atmosphere, or applying an acidic compound and/or an acidic solution to the base-treated water-containing coagulum, or spraying an acidic compound and/or an acidic solution onto the base-treated water-containing coagulum using a sprayer, a shower, or other means, or immersing the base-treated water-containing coagulum in an acidic solution. In particular, the pH is preferably adjusted to 2 to 7 by a method of bringing the base-treated water-containing coagulum into contact with an acidic solution.

The acidic solution used is preferably one whose pH is adjusted to 6 or lower. This allows for a long-lasting deodorizing effect and excellent heat-aging resistance. The upper limit of the pH of the acidic solution is more preferably 5 or lower, still more preferably 4.5 or lower, while the lower limit is not limited and depends on the duration of contact, but it is preferably 1 or higher, more preferably 2 or higher, because too high an acidity may cause rubber degradation or require a time-consuming effluent treatment process.

The treatment time (duration of contact) and treatment temperature (temperature of contact) between the base-treated water-containing coagulum and the acidic solution may be selected as appropriate, e.g., within a range of 3 seconds to 30 minutes and 10 to 50°C, respectively.

The acidic solution is preferably an acidic compound solution. The acidic compound solution may be, for example, an aqueous solution of an acidic compound or an alcoholic solution of an acidic compound, and is preferably an aqueous solution of an acidic compound. Here, the acidic solution can be prepared by diluting and dissolving an acidic compound in a solvent such as water or alcohol.

Non-limiting examples of the acidic compound include inorganic acids such as hydrochloric acid, nitric acid, sulfuric acid, phosphoric acid, polyphosphoric acid, metaphosphoric acid, boric acid, boronic acid, sulfanilic acid, and sulfamic acid; and organic acids such as formic acid, acetic acid, glycolic acid, oxalic acid, propionic acid, malonic acid, succinic acid, adipic acid, maleic acid, malic acid, tartaric acid, citric acid, benzoic acid, phthalic acid, isophthalic acid, glutaric acid, gluconic acid, lactic acid, aspartic acid, glutamic acid, salicylic acid, methanesulfonic acid, itaconic acid, benzenesulfonic acid, toluenesulfonic acid, naphthalenedisulfonic acid, trifluoromethanesulfonic acid, styrenesulfonic acid, trifluoroacetic acid, barbituric acid, acrylic acid, methacrylic acid, cinnamic acid, 4-hydroxybenzoic acid, aminobenzoic acid, naphthalenedisulfonic acid, hydroxybenzenesulfonic acid, toluenesulfinic acid, benzenesulfinic acid, $\alpha$-resorcylic acid, $\beta$-resorcylic acid, $\gamma$-resorcylic acid, gallic acid, fluoroglycine, sulfosalicylic acid, ascorbic acid, erythorbic acid, and bisphenol acid. These acidic compounds may be used alone or in combinations of two or more. Preferred among these are sulfuric acid, formic acid, and acetic acid.

The acidic compound concentration in the acidic solution may be selected as appropriate. From the standpoint of heat-aging resistance, the concentration is preferably 0.1 to 20% by mass, more preferably 0.3 to 10% by mass, still more preferably 0.5 to 5.0% by mass, based on 100% by mass of the acidic solution.

The pH adjustment step of adjusting the pH of the base-treated water-containing coagulum to 2 to 7 may be followed by a step of washing away the acidic solution remaining on the surface of the product. The washing step may be carried out as described above.

From the standpoint of odor reduction, the modified natural rubber preferably has an odor component index of $4.0 \times 10^6$ or lower, more preferably $2.0 \times 10^6$ or lower, still more preferably $1.5 \times 10^6$ or lower, further more preferably $1.0 \times 10^6$ or lower. A lower upper limit of the odor component index is desired, while the lower limit thereof is not limited. Here, the odor component index of the odor-reduced natural rubber is obtained by correcting the peak area ratios of the main odor-causing substances of natural rubber detected using GCMS with the olfactory thresholds of the respective components and summing all these values, and can be determined as described later in EXAMPLES.

[Rubber composition]

The rubber composition contains at least one rubber component including the modified natural rubber. Owing to the presence of the modified natural rubber, the rubber composition is excellent in odor reduction and degradation resistance.

The modified natural rubber content of the rubber composition is preferably 10% by mass or more, more preferably 25% by mass or more, still more preferably 30% by mass or more, particularly preferably 50% by mass or more, based on 100% by mass of the rubber component content. The upper limit of the content is not limited and may be 100% by mass. When the content is within the range indicated above, the rubber composition tends to provide odor reduction and to ensure the required properties of a tire component.

Examples of rubber components that may be used in addition to the modified natural rubber include diene rubbers such as isoprene-based rubbers other than the modified natural rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). These diene rubbers may be used alone or in combinations of two or more. Preferred among these are isoprene-based rubbers and BR, with BR being more preferred.

When the rubber composition contains isoprene-based rubbers other than the modified natural rubbers, the combined amount of isoprene-based rubbers (the combined amount of modified natural rubbers and other isoprene-based rubbers including natural rubbers and polyisoprene rubbers) based on 100% by mass of the rubber component content is preferably 10% by mass or more, more preferably 25% by mass or more, still more preferably 30% by mass or more. The upper limit of the amount is not limited and may be 100% by mass, but is preferably 80% by mass or less, more preferably 60% by mass or less, still more preferably 50% by mass or less. When the amount is within the range indicated above, the rubber composition tends to ensure the required properties of a tire component.

Examples of the isoprene-based rubbers include natural rubbers (NR) other than the modified natural rubbers, polyisoprene rubbers (IR), refined NR, modified NR, and modified IR. Examples of the NR include those commonly used in the tire industry such as SIR20, RSS#3, and TSR20. Any IR may be used including for example those commonly used in the tire industry, such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

When the rubber composition contains BR, the amount (total amount) of BR based on 100% by mass of the rubber component content is preferably 20% by mass or more, more preferably 30% by mass or more, still more preferably 40% by mass or more. The upper limit of the amount is preferably 90% by mass or less, more preferably 80% by mass or less, still more preferably 70% by mass or less, particularly preferably 50% by mass or less. When the amount is within the range indicated above, the rubber composition tends to provide odor reduction and to ensure the required properties of a tire component.

In the rubber composition, the combined amount of isoprene-based rubbers and BR based on 100% by mass of the rubber component content is preferably 50% by mass or more, more preferably 80% by mass or more, still more preferably 90% by mass or more. The upper limit of the amount is not limited and is preferably 100% by mass. When the amount is within the range indicated above, the rubber composition tends to provide odor reduction and to ensure the required properties of a tire component.

Any BR may be used including high cis-content BR, BR containing syndiotactic polybutadiene crystals, and rare earth-catalyzed BR. Examples of commercial products include those from Ube Industries, Ltd., JSR Corporation, Asahi Kasei Corporation, and Zeon Corporation. The BR may be either unmodified or modified BR, and examples of the modified BR include modified BR into which functional groups as described below have been introduced. These may be used alone or in combinations of two or more. Suitable among these are high cis-content BR and rare earth-catalyzed BR. Here, the cis content (cis-1,4-bond content) of the high cis-content BR is preferably 80% by mass or more, more preferably 90% by mass or more, still more preferably 95% by mass or more, particularly preferably 98% by mass or more.

The modified BR may be any BR having a functional group interactive with a filler such as silica, and examples include chain end-modified BR obtained by modifying at least one chain end of BR with a compound (modifier) having the functional group (chain end-modified BR terminated with the functional group); backbone-modified BR having the functional group in the backbone; backbone- and chain end-modified BR having the functional group in both the backbone and chain end (e.g., backbone- and chain end-modified BR in which the backbone has the functional group and at least one chain end is modified with the modifier); and chain end-modified BR into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups, each of which may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

In particular, the modified BR is suitably BR modified with a compound (modifier) represented by the following formula:

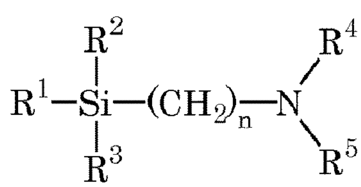

wherein $R^1$, $R^2$, and $R^3$ are the same or different and each represent an alkyl group, an alkoxy group, a silyloxy group, an acetal group, a carboxy group (-COOH), a mercapto group (-SH), or a derivative thereof; $R^4$ and $R^5$ are the same or different and each represent a hydrogen atom or an alkyl group, and $R^4$ and $R^5$ may be joined to form a ring structure together with the nitrogen atom; and n represents an integer.

$R^1$, $R^2$, and $R^3$ are each suitably an alkoxy group (preferably a C1-C8, more preferably C1-C4 alkoxy group). $R^4$ and $R^5$ are each suitably an alkyl group (preferably a C1-C3 alkyl group). The integer n is preferably 1 to 5, more preferably 2 to 4, still more preferably 3. Moreover, when $R^4$ and $R^5$ are joined to form a ring structure together with the nitrogen atom, the ring structure is preferably a 4- to 8-membered ring. Here, the term "alkoxy group" includes cycloalkoxy groups (e.g., a cyclohexyloxy group) and aryloxy groups (e.g., a phenoxy group, a benzyloxy group) .

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane. These may be used alone or in combinations of two or more.

The modified BR may also suitably be BR modified with any of the following compounds (modifiers). Examples of modifiers include polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidylmetaxylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamic chloride, 4-morpholinecarbonyl chloride, 1-pyrrolidinecarbonyl chloride, N,N-dimethylcarbamic chloride, and N,N-diethylcarbamic chloride; and epoxy group-containing silane compounds such as 1,3-bis(glycidyloxypropyl)tetramethyldisiloxane and (3-glycidyloxypropyl)pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;

N-substituted aziridine compounds such as ethyleneimine and propyleneimine; alkoxysilanes such as methyltriethoxysilane; (thio)benzophenone compounds having amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds having amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and

N,N-bis(2,3-epoxypropoxy)aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethyleneurea, 1,3-divinylethyleneurea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Preferred among these is modified BR modified with an alkoxysilane.

Here, the modification with any of the compounds (modifiers) may be carried out by known methods.

From the standpoint of ensuring the required properties of a tire component, the rubber composition preferably contains a filler.

In the rubber composition, the amount of fillers per 100 parts by mass of the rubber component content is preferably 5 parts by mass or more, more preferably 20 parts by mass or more, still more preferably 25 parts by mass or more, particularly preferably 40 parts by mass or more. When the amount is adjusted to not less than the lower limit, a good reinforcing effect tends to be obtained to ensure the required properties of a tire component. The amount is preferably 150 parts by mass or less, more preferably 100 parts by mass or less, still more preferably 80 parts by mass or less. When the amount is adjusted to not more than the upper limit, good filler dispersion tends to be obtained.

Examples of fillers include organic fillers such as carbon black; and inorganic fillers such as silica, alumina, alumina hydrate, aluminum hydroxide, magnesium hydroxide, magnesium oxide, talc, titanium white, titanium black, calcium oxide, calcium hydroxide, aluminum magnesium oxide, clay, pyrophyllite, bentonite, aluminum silicate, magnesium silicate, calcium silicate, aluminum calcium silicate, magnesium silicate, zirconium, and zirconium oxide. From the standpoint of ensuring the required properties of a tire component, carbon black or silica is preferred among these. These may be used alone or in combinations of two or more.

In the rubber composition, the amount of carbon black per 100 parts by mass of the rubber component content is preferably 5 parts by mass or more, more preferably 15 parts by mass or more, still more preferably 20 parts by mass

or more, particularly preferably 40 parts by mass or more. The amount is preferably 100 parts by mass or less, more preferably 80 parts by mass or less, still more preferably 60 parts by mass or less. When the amount is within the range indicated above, a good reinforcing effect tends to be obtained to ensure the required properties of a tire component.

From the standpoint of ensuring the required properties of a tire component, the nitrogen adsorption specific surface are ($N_2SA$) of the carbon black is preferably 35 $m^2/g$ or more, more preferably 42 $m^2/g$ or more, still more preferably 50 $m^2/g$ or more, particularly preferably 80 $m^2/g$ or more, but is preferably 200 $m^2/g$ or less, more preferably 150 $m^2/g$ or less.

Here, the nitrogen adsorption specific surface area of the carbon black is measured in accordance with ASTM D4820-93.

Non-limiting examples of carbon black include N134, N110, N220, N234, N219, N339, N330, N326, N351, N550, and N762. Examples of commercial products include those from Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon. One of these may be used alone, or two or more of these may be used in combination.

In the rubber composition, the amount of silica per 100 parts by mass of the rubber component content is preferably 5 parts by mass or more, more preferably 15 parts by mass or more, still more preferably 20 parts by mass or more. The amount is preferably 100 parts by mass or less, more preferably 80 parts by mass or less, still more preferably 60 parts by mass or less. When the amount is within the range indicated above, a good reinforcing effect tends to be obtained to ensure the required properties of a tire component.

The nitrogen adsorption specific surface area ($N_2SA$) of the silica is preferably 40 $m^2/g$ or more, more preferably 70 $m^2/g$ or more, still more preferably 110 $m^2/g$ or more. When the amount is adjusted to not less than the lower limit, a good reinforcing effect tends to be obtained to ensure the required properties of a tire component. The $N_2SA$ of the silica is also preferably 220 $m^2/g$ or less, more preferably 200 $m^2/g$ or less. When the amount is adjusted to not more than the upper limit, good dispersion tends to be obtained.

Here, the $N_2SA$ of the silica is determined by a BET method in accordance with ASTM D3037-93.

Examples of silica include dry silica (anhydrous silica) and wet silica (hydrous silica). Wet silica is preferred among these because it contains a large number of silanol groups. Examples of commercial products include those from Degussa, Rhodia, Tosoh Silica Corporation, Solvay Japan, and Tokuyama Corporation.

Examples of other components that may be used in the rubber composition include compounding agents conventionally used in the rubber industry, such as silane coupling agents, softeners, solid resins, waxes, various types of antioxidants, stearic acid, zinc oxide, processing aids, and tackifiers.

Non-limiting examples of silane coupling agents include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. Preferred among these are sulfide and mercapto silane coupling agents. Examples of commercial products include those from Degussa, Momentive, Shin-Etsu Silicones, Tokyo Chemical Industry Co., Ltd., AZmax Co., and Dow Corning Toray Co., Ltd.

When the rubber composition contains silica, it preferably further contains a silane coupling agent.

In the rubber composition, the amount of silane coupling agents per 100 parts by mass of the silica content is preferably 3 parts by mass or more, more preferably 5 parts by mass or more. When the amount is 3 parts by mass or more, the addition tends to be effective. The amount is also preferably 25 parts by mass or less, more preferably 20 parts by mass or less. When the amount is 25 parts by mass or less, an effect commensurate with the amount tends to be obtained, and good processability during kneading tends to be obtained.

Non-limiting preferred examples of softeners (e.g., hydrocarbons and resins which are in a liquid state at room temperature (25°C)) include oils and liquid diene polymers. The use of softeners can well ensure the required properties of a tire component. Preferred among these are oils.

In the rubber composition, the amount of oils per 100 parts by mass of the rubber component content is preferably 30 parts by mass or less, more preferably 20 parts by mass or less, still more preferably 10 parts by mass or less. Moreover, the lower limit is not limited and no oil may be present, but the lower limit is, for example, preferably 3 parts by mass or more per 100 parts by mass of the rubber component content. When the amount is within the range indicated

above, the rubber composition tends to ensure the required properties of a tire component.

Here, the amount of oils includes the amount of the oils contained in the rubbers (oil extended rubbers), if used.

Examples of oils include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. Examples of commercial products include those from Idemitsu Kosan Co., Ltd., Sankyo Yuka Kogyo K.K., Japan Energy Corporation, Olisoy, H&R, Hokoku Corporation, Showa Shell Sekiyu K.K., and Fuji Kosan Co., Ltd.

Any solid resin (resins which are in a solid state at room temperature (25°C) (solid resins)) widely used in the tire industry may be used, and examples include petroleum resins, styrene resins, coumarone-indene resins, terpene resins, p-t-butylphenol acetylene resins, and acrylic resins. Preferred among these are petroleum resins.

In the rubber composition, the amount of petroleum resins per 100 parts by mass of the rubber component content is preferably 30 parts by mass or less, more preferably 20 parts by mass or less, still more preferably 10 parts by mass or less. Moreover, the lower limit is not limited and no petroleum resin may be present, but the lower limit is, for example, preferably 5 parts by mass or more per 100 parts by mass of the rubber component content. When the amount is within the range indicated above, the rubber composition tends to ensure the required properties of a tire component.

The term "petroleum resin" refers to a resin formed by polymerizing an oil fraction (e.g., C5 fraction or C9 fraction) obtained as a by-product of naphtha cracking used in the petrochemical industry. Examples include C5 petroleum resins produced by cationic polymerization of a C5 acyclic olefin mixture, dicyclopentadiene petroleum resins produced by thermal polymerization of a dicyclopentadiene fraction, C9 petroleum resins produced by cationic polymerization of a C9 aromatic olefin mixture, C5/C9 petroleum resins, and petroleum resins called as pure monomer resins produced from pure $\alpha$-methylstyrene prepared by extracting $\alpha$-methylstyrene from C9 fraction, as well as hydrogenated products of the foregoing resins. C5 petroleum resins, C9 petroleum resins, and C5/C9 petroleum resins are preferred among these, with C5 petroleum resins and C5/C9 petroleum resins being more preferred.

The weight average molecular weight (Mw) of the petroleum resins is preferably 1500 or more, more preferably 1700 or more. The Mw is also preferably 5000 or less, more preferably 4500 or less, still more preferably 4000 or less, particularly preferably 3800 or less. When the Mw is within the range indicated above, the rubber composition tends to ensure the required properties of a tire component.

Herein, the Mw of the petroleum resins can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The softening point of the petroleum resins is preferably 30°C or higher, more preferably 60°C or higher, still more preferably 80°C or higher. The softening point is also preferably 140°C or lower, more preferably 110°C or lower, particularly preferably 96°C or lower. When the softening point is within the range indicated above, the rubber composition tends to ensure the required properties of a tire component.

Herein, the softening point of the petroleum resins is determined as set forth in JIS K 6220-1:2001 using a ring and ball softening point measuring apparatus and is defined as the temperature at which the ball drops down.

Non-limiting examples of waxes include petroleum waxes such as paraffin waxes and microcrystalline waxes; naturally occurring waxes such as plant waxes and animal waxes; and synthetic waxes such as polymers of ethylene, propylene, or other similar monomers. Examples of commercial products include those from Ouchi Shinko Chemical Industrial Co., Ltd., Nippon Seiro Co., Ltd., and Seiko Chemical Co., Ltd. These may be used alone or in combinations of two or more. Preferred among these are petroleum waxes, with paraffin waxes being more preferred.

In the rubber composition, the amount of waxes per 100 parts by mass of the rubber component content is preferably 0.5 to 20 parts by mass, more preferably 1.0 to 10 parts by mass. When the amount is within the range indicated above, the rubber composition tends to ensure the required properties of a tire component.

Examples of antioxidants include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine and quinoline antioxidants, with N-(1,3-dimethylbutyl)-N'-phenyl-p-phenylenediamine and/or polymerized 2,2,4-trimethyl-1,2-dihydroquinoline being more preferred. Examples of commercial products include those from Seiko Chemical Co., Ltd., Sumitomo Chemical Co., Ltd., Ouchi Shinko Chemical Industrial Co., Ltd., and Flexsys.

In the rubber composition, the amount of antioxidants per 100 parts by mass of the rubber component content

is preferably 1 to 10 parts by mass, more preferably 2 to 7 parts by mass, still more preferably 3 to 6 parts by mass. When the amount is within the range indicated above, the rubber composition tends to ensure the required properties of a tire component.

The stearic acid used may be a conventional one, and examples include products of NOF Corporation, Kao Corporation, Fujifilm Wako Pure Chemical Corporation, and Chiba Fatty Acid Co., Ltd. The zinc oxide used may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

In the rubber composition, the amount of stearic acid per 100 parts by mass of the rubber component content is preferably 0.5 to 10.0 parts by mass, more preferably 1.0 to 5.0 parts by mass, still more preferably 2.0 to 4.0 parts by mass. When the amount is within the range indicated above, the rubber composition tends to ensure the required properties of a tire component.

In the rubber composition, the amount of zinc oxide per 100 parts by mass of the rubber component content is preferably 0.5 to 10 parts by mass, more preferably 1 to 7 parts by mass, still more preferably 2 to 4 parts by mass. When the amount is within the range indicated above, the rubber composition tends to ensure the required properties of a tire component.

Suitable examples of materials that may be compounded in the rubber composition include vulcanizing agents and vulcanization accelerators. The vulcanizing agents include any chemical capable of crosslinking a rubber component, including for example sulfur. Hybrid crosslinking agents (organic crosslinking agents) may also be used as the vulcanizing agents. One of these may be used alone, or two or more of these may be used in combination. Preferred among these is sulfur.

In the rubber composition, the amount of sulfur per 100 parts by mass of the rubber component content is preferably 0.1 to 10.0 parts by mass, more preferably 0.5 to 5.0 parts by mass, still more preferably 0.7 to 3.0 parts by mass, particularly preferably 1.0 to 2.5 parts by mass. When the amount is within the range indicated above, the rubber composition tends to ensure the required properties of a tire component.

Examples of sulfur include those commonly used in the rubber industry, such as powdered sulfur, precipitated sulfur, colloidal sulfur, insoluble sulfur, highly dispersible sulfur, and soluble sulfur. Non-limiting examples of organic crosslinking agents include maleimide compounds, alkylphenol-sulfur chloride condensates, organic peroxides, and amine organic sulfides. These may be used alone or in combinations of two or more. Examples of commercial products include those from Tsurumi Chemical Industry Co., Ltd., Karuizawa Sulfur Co., Ltd., Shikoku Chemicals Corporation, Flexsys, Nippon Kanryu Industry Co., Ltd., and Hosoi Chemical Industry Co., Ltd.

In the rubber composition, the amount of organic crosslinking agents per 100 parts by mass of the rubber component content is preferably 0.1 to 10.0 parts by mass, more preferably 0.5 to 5.0 parts by mass, still more preferably 0.7 to 3.0 parts by mass. When the amount is within the range indicated above, the rubber composition tends to ensure the required properties of a tire component.

In the rubber composition, the amount of vulcanization accelerators per 100 parts by mass of the rubber component content is preferably 0.1 to 7.0 parts by mass, more preferably 0.3 to 5.0 parts by mass, still more preferably 0.5 to 3.0 parts by mass, particularly preferably 1.0 to 2.0 parts by mass. When the amount is within the range indicated above, the rubber composition tends to ensure the required properties of a tire component.

Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Preferred among these are sulfenamide and guanidine vulcanization accelerators.

The rubber composition may be prepared, for example, by kneading the components such as the modified natural rubber and filler using a kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by, for example, press vulcanization. The vulcanization temperature is usually 140 to 190°C, preferably 150 to 185°C.

From the standpoint of odor reduction, the (vulcanized) rubber composition preferably has an odor component index of $5.0 \times 10^5$ or lower, more preferably $4.8 \times 10^5$ or lower, still more preferably $4.5 \times 10^5$ or lower, particularly preferably $4.0 \times 10^5$ or lower. A lower upper limit of the odor component index is desired, while the lower limit thereof

is not limited. Here, the odor component index of the (vulcanized) rubber composition is obtained by correcting the peak area ratios of the main odor-causing substances of natural rubber detected on the (vulcanized) rubber composition using GCMS with the olfactory thresholds of the respective components and summing all these values, and can be determined as described later in EXAMPLES.

The rubber composition may be used in various tire components, including treads (cap treads), sidewalls, base treads, undertreads, clinch apexes, bead apexes, breaker cushion rubbers, rubbers for carcass cord toppings, insulations, chafers, and innerliners, as well as side reinforcement layers of run-flat tires. From the standpoint of reducing odors, the rubber composition can also be suitably used in tire outer layer components such as treads, sidewalls, clinches, and wings, and particularly in sidewalls, among others.

[Tire]

The tire can be produced from the rubber composition by conventional methods.

Specifically, the (unvulcanized) rubber composition containing the components may be extruded into the shape of a tire component in an unvulcanized stage and then assembled with other tire components on a tire building machine in a usual manner to build an unvulcanized tire, which may then be heated and pressurized in a vulcanizer to produce a tire.

The tire may be, for example, a pneumatic tire or an airless (solid) tire. Preferably it is a pneumatic tire, among others. The tire may be used as a passenger car tire, a large passenger car tire, a large SUV tire, a heavy duty (e.g., truck, bus) tire, a light truck tire, a motorcycle tire, a racing tire (high performance tire), etc. Moreover, the tire may be used as an all-season tire, a summer tire, a winter tire (e.g., a studless winter tire, a snow tire, a studded tire), etc.

EXAMPLES

The present invention will be specifically described with reference to, but not limited to, examples.

The chemicals used in the preparation of the natural rubber samples of the examples and comparative examples are listed below.

Field latex: field latex available from Muhibbah Lateks
Phenoxyethanol: phenoxyethanol available from Fujifilm Wako Pure Chemical Corporation
Boric acid: boric acid available from Fujifilm Wako Pure Chemical Corporation
Dehydroacetic acid: dehydroacetic acid available from Fujifilm Wako Pure Chemical Corporation
1,3,5-Triazine: 1,3,5-triazine available from Sigma-Aldrich
Propylparaben: propylparaben available from Sigma-Aldrich
Basic substance: sodium carbonate ($Na_2CO_3$) (available from Sigma-Aldrich)
Surfactant: EMAL E-27C (sodium polyoxyethylene lauryl ether sulfate) available from Kao Corporation
Sulfuric acid: available from Fujifilm Wako Pure Chemical Corporation (active ingredient: 98%)
Formic acid: formic acid available from Kanto Chemical Co., Inc.

<Procurement of natural rubber sample>

A cup lump was procured from a typical rubber plantation. Then, the procured cup lump was treated with a hammer mill available from Natural Rubber Machine and Equipment, and then micronized (milled) with a rubber granulator, followed by washing the milled cup lump while stirring in a water bath, and discharging the aqueous phase alone to take out the milled cup lump, whereby the cup lump was washed (milling washing treatment). The milled and washed cup lump had an average size of 5 mm.

(Examples 1 to 8)

The field latex was adjusted to have a solid concentration (DRC) of 30% (w/v), and then combined and mixed with an aqueous solution of the antiseptic disinfectant so that the amount of the antiseptic disinfectant per 100 parts by mass of the rubber solid content of the latex was as shown in Table 1. Next, the resulting mixture was combined and mixed with the acid having the concentration shown in Table 1 for coagulation (aggregation) to obtain a water-containing coagulum (solid raw material). The water-containing coagulum was stored for about one month. The moisture content of the water-containing coagulum before the storage was measured as described later, and found to be as shown in Table 1.

The water-containing coagulum stored for about one month as described above was crushed and repeatedly washed with water five times. Then, 100 g of the resulting water-containing coagulum was immersed for six hours at room temperature (20 to 30°C) in 1 L of the aqueous solution prepared at the concentration shown in Table 1. In order

to prevent the water-containing coagulum from floating on the surface of the aqueous solution during the immersion, an appropriate weight or the like was placed on the coagulum so that the entire coagulum was submerged in the aqueous solution. The water-containing coagulum was taken out, washed with water, and then dried at the temperature shown in Table 1. Thus, natural rubber samples (modified NRs 1 to 8) were obtained.

(Comparative Examples 1 to 3)

The milled and washed cup lump was stored at room temperature (20 to 30°C) for about one month. The moisture content of the cup lump before the storage was measured as described later, and found to be as shown in Table 1.

The cup lump stored for about one month as described above was crushed and repeatedly washed with water five times. Then, 100 g of the cup lump was immersed for six hours at room temperature (20 to 30°C) in 1 L of the aqueous solution prepared at the concentration shown in Table 1. In order to prevent the cup lump from floating on the surface of the aqueous solution during the immersion, an appropriate weight or the like was placed on the cup lump so that the entire cup lump was submerged in the aqueous solution. The cup lump was taken out, washed with water, and then dried at the temperature shown in Table 1. Thus, natural rubber samples (NRs 1 to 3) were obtained.

(Comparative Examples 4 and 5)

The field latex was adjusted to have a solid concentration (DRC) of 30% (w/v), and then combined and mixed with the acid having the concentration shown in Table 1 per 100 parts by mass of the rubber solid content of the latex for coagulation (aggregation) to obtain a water-containing coagulum (solid raw material). The water-containing coagulum was stored for about one month. The moisture content of the water-containing coagulum before the storage was measured as described later, and found to be as shown in Table 1.

The water-containing coagulum stored for about one month as described above was crushed and repeatedly washed with water five times. Then, 100 g of the water-containing coagulum was immersed for six hours at room temperature (20 to 30°C) in 1 L of the aqueous solution prepared at the concentration shown in Table 1. In order to prevent the water-containing coagulum from floating on the surface of the aqueous solution during the immersion, an appropriate weight or the like was placed on the coagulum so that the entire coagulum was submerged in the aqueous solution. The water-containing coagulum was taken out, washed with water, and then dried at the temperature shown in Table 1. Thus, natural rubber samples (NRs 4 and 5) were obtained.

The chemicals used in the preparation of test tires are listed.

Modified NRs 1 to 8 and NRs 1 to 5: natural rubber samples prepared in the comparative examples and examples
BR: BR150B (cis content: 98% by mass) available from Ube Industries, Ltd.
Carbon black: Diablack N550 ($N_2SA$: 42 $m^2/g$) available from Mitsubishi Chemical Corporation
Petroleum resin: Petrotack 100V (C5/C9 petroleum resin, Mw: 3800, softening point: 96°C) available from Tosoh Corporation
Wax: Ozoace 0355 available from Nippon Seiro Co., Ltd.
Antioxidant 6C: Nocrac 6C (N-(1,3-dimethylbutyl)-N'-phenyl-p-phenylenediamine) available from Ouchi Shinko Chemical Industrial Co., Ltd.
Antioxidant RD: Nocrac 224 (polymerized 2,2,4-trimethyl-1,2-dihydroquinoline) available from Ouchi Shinko Chemical Industrial Co., Ltd.
Stearic acid: stearic acid beads "TSUBAKI" available from NOF Corporation
Zinc oxide: zinc oxide #2 available from Mitsui Mining & Smelting Co., Ltd.
Oil: VivaTec 400 (TDAE oil) available from H&R
Sulfur: powdered sulfur (containing 5% oil) available from Tsurumi Chemical Industry Co., Ltd.
Vulcanization accelerator: Nocceler CZ (N-cyclohexyl-2-benzothiazylsulfenamide, CBS) available from Ouchi Shinko Chemical Industrial Co., Ltd.

[Preparation of test tires]

According to the formulation recipe shown in Table 2, the materials other than the sulfur and vulcanization accelerator were kneaded at 150°C for five minutes using a 1.7 L Banbury mixer (Kobe Steel, Ltd.) to obtain a kneaded mixture. Then, the kneaded mixture was combined with the sulfur and vulcanization accelerator, and they were kneaded at 80°C for five minutes using an open roll mill to obtain an unvulcanized rubber composition.

The unvulcanized rubber composition was formed into the shape of a sidewall and assembled with other tire components to build an unvulcanized tire which was then vulcanized at 150°C for 12 minutes to prepare a test tire (size: 195/65R15).

The cup lump before storage, natural rubber samples, and test tires in the comparative examples and examples were evaluated as follows. Tables 1 and 2 show the results. In the tables, "n.d." indicates that no odor components were detected by GCMS because they were present in a very small amount.

(Measurement of moisture content)

One gram (weight before drying) of the cup lump or natural rubber sample was accurately weighed, finely cut, and dried at 70°C for 14 hours. Then, the weight after drying was measured and the moisture content was determined using the following equation.

$$\text{Moisture content (\%)} = \{(\text{Weight (g) before drying} - \text{Weight (g) after drying})/\text{Weight (g) before drying}\} \times 100$$

1. Method for analyzing natural rubber

(Odor component index of natural rubber)

The main odor-causing substances of natural rubber include lower fatty acids and aldehydes thereof, such as acetic acid, valeric acid, isovaleric acid, isovaleraldehyde, and butyric acid.

Thus, the peak area ratios of these components detected using head-space GCMS (product name "GCMS-QP2010 Ultra", Shimadzu Corporation, with head space sampler "HS-20", Shimadzu Corporation) were corrected with the olfactory thresholds of the respective components, and all the values were summed as an odor component index (natural rubber).

(Odor component ratio (%) of natural rubber)

With respect to the odor component indexes determined as above, the odor component ratio was evaluated by the following equation.

$$\text{Odor component ratio (\%) of natural rubber} = (\text{Odor component index of natural rubber sample of each example})/(\text{Odor component index of natural rubber sample of Comparative Example 1}) \times 100$$

(Evaluation of degradation performance of natural rubber)

The degradation performance of each natural rubber sample was evaluated based on the Mooney viscosity retention after aging at 80°C for 72 hours according to the equation below. A higher Mooney viscosity retention indicates that the natural rubber sample has better degradation performance (heat-aging resistance). Specifically, a Mooney viscosity retention of 85% or higher is considered as very good degradation performance.

$$\text{Mooney viscosity retention (\%)} = (\text{Mooney viscosity after aging}/\text{Mooney viscosity before aging}) \times 100$$

2. Method for analyzing rubber composition

(Odor component index of rubber composition)

A sample (rubber composition sample) was taken from the sidewall portion of the test tire. This sample was analyzed in the same manner as in the method for analyzing the odor components of natural rubber, and the peak area ratios of the components detected were corrected with the olfactory thresholds of the respective components, and all the values were summed as an odor component index (rubber composition).

(Odor Component ratio (%) of rubber composition)

With respect to the odor component indexes determined as above, the odor component ratio was evaluated by the following equation.

$$\text{Odor component ratio (\%) of rubber composition} = (\text{Odor component index of rubber composition sample of each example})/(\text{Odor component index of rubber composition sample of Comparative Example 1}) \times 100$$

(Evaluation of degradation performance of rubber composition)

A tensile test was performed on No. 3 dumbbell specimens formed from the samples (rubber composition samples) in accordance with JIS K 6251, and the tensile strength at break (TB) of each sample was measured. Next, each sample was heat-aged at 80°C for 168 hours and then TB was measured. The retention of tensile strength at break (TB) before and after aging was determined by the equation below. A higher value indicates a smaller change in rubber physical properties due to heat-aging and better heat-aging resistance. Specifically, a retention of tensile strength at break of 70% or higher is considered as sufficiently good degradation performance.

$$\text{Retention (\%)} = \text{TB after heat-aging}/\text{TB before heat-aging} \times 100$$

[Table 1]

| Natural rubber sample | | | | | | | | | | | | | |
|---|---|---|---|---|---|---|---|---|---|---|---|---|---|
| | Example 1 (Modified NR 1) | Example 2 (Modified NR 2) | Example 3 (Modified NR 3) | Example 4 (Modified NR 4) | Example 5 (Modified NR 5) | Example 6 (Modified NR 6) | Example 7 (Modified NR 7) | Example 8 (Modified NR 8) | Comparative Example 1 (NR 1) | Comparative Example 2 (NR 2) | Comparative Example 3 (NR 3) | Comparative Example 4 (NR 4) | Comparative Example 5 (NR 5) |
| Antiseptic disinfectant (amount added/100 parts by mass of rubber solid content) | Phenoxyethanol 1 part by mass | Phenoxyethanol 5 parts by mass | Boric acid 1 part by mass | Boric acid 5 parts by mass | Dehydroacetic acid 0.5 parts by mass | Dehydroacetic acid 5 parts by mass | 1,3,5-triazine 0.05 parts by mass | Propylparaben 05 parts by mass | Not added | Not added | Not added | Not added | Notadded |
| Acid | 2% by mass sulfuric acid | 2% by mass sulfuric acid | 2% by mass sulfuric acid | 2% by mass sulfuric acid | 2% by mass sulfuric acid | 2% by mass sulfuric acid | 2% by mass sulfuric acid | 2% by mass sulfuric acid | Not added | Not added | Not added | 5% by mass formic acid | 2% by mass sulfuric acid |
| Drying temperature (°C) | 120 | 120 | 120 | 120 | 120 | 120 | 120 | 120 | 120 | 120 | 140 | 120 | 145 |
| Moisture content (%) | 30 | 30 | 30 | 30 | 30 | 30 | 30 | 30 | 30 | 45 | 30 | 10 | 22 |
| Basic substance | Na2CO3 | Na2CO3 | Na2CO3 | Na2CO3 | Na2CO3 | Na2CO3 | Na2CO3 | Na2CO3 | Na2CO3 | Na2CO3 | Na2CO3 | Na2CO3 | Na2CO3 |
| Aqueous solution concentration :basic substance | 1.0% | 1.0% | 1.0% | 1.0% | 1.0% | 1.0% | 1.0% | 1.0% | 1.0% | 1.0% | 1.0% | 1.0% | 1.0% |
| Surfactant | EMAL 27C 1.0% | EMAL 27C 1.0% | EMAL 27C 1.0% | EMAL 27C 1.0% | EMAL 27C 1.0% | EMAL 27C 1.0% | EMAL 27C 1.0% | EMAL 27C 1.0% | EMAL27C 1.0% | EMAL 27C 1.0% | EMAL 27C 1.0% | EMAL 27C 1.0% | EMAL 27C 1.0% |

(continued)

| Natural rubber sample | | | | | | | | | | | | | |
|---|---|---|---|---|---|---|---|---|---|---|---|---|---|
| | Example 1 (Modified NR 1) | Example 2 (Modified NR 2) | Example 3 (Modified NR 3) | Example 4 (Modified NR 4) | Example 5 (Modified NR 5) | Example 6 (Modified NR 6) | Example 7 (Modified NR 7) | Example 8 (Modified NR 8) | Comparative Example 1 (NR 1) | Comparative Example 2 (NR 2) | Comparative Example 3 (NR 3) | Comparative Example 4 (NR 4) | Comparative Example 5 (NR 5) |
| Odor component index of natural rubber | $0.2\times10^7$ | $0.1\times10^7$ | $0.4\times10^7$ | $0.2\times10^7$ | $0.2\times10^7$ | $0.1\times10^7$ | $0.4\times10^7$ | $0.4\times10^7$ | $2.0\times10^7$ | $2.3\times10^7$ | $2.2\times10^7$ | $0.6\times10^7$ | $1.6\times10^7$ |
| Odor component ratio (%) of natural rubber | 10 | 5 | 20 | 10 | 10 | 5 | 20 | 20 | 100 | 115 | 110 | 30 | 80 |
| Mooney viscosity retention (%) of natural rubber | 90 | 95 | 90 | 95 | 90 | 90 | 90 | 90 | 80 | 75 | 65 | 80 | 80 |

[Table 2]

| Rubber composition sample | | Examples | | | | | | | | Comparative Examples | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Formulation (parts by mass) | Modified NR 1 | 50 | - | - | - | - | - | - | - | - | - | - | - | - |
| | Modified NR 2 | - | 50 | - | - | - | - | - | - | - | - | - | - | - |
| | Modified NR 3 | - | - | 50 | - | - | - | - | - | - | - | - | - | - |
| | Modified NR 4 | - | - | - | 50 | - | - | - | - | - | - | - | - | - |
| | Modified NR 5 | - | - | - | - | 50 | - | - | - | - | - | - | - | - |
| | Modified NR 6 | - | - | - | - | - | 50 | - | - | - | - | - | - | - |
| | Modified NR 7 | - | - | - | - | - | - | 50 | - | - | - | - | - | - |
| | Modified NR 8 | - | - | - | - | - | - | - | 50 | - | - | - | - | - |
| | NR 1 | - | - | - | - | - | - | - | - | 50 | - | - | - | - |
| | NR 2 | - | - | - | - | - | - | - | - | - | 50 | - | - | - |
| | NR 3 | - | - | - | - | - | - | - | - | - | - | 50 | - | - |
| | NR 4 | - | - | - | - | - | - | - | - | - | - | - | 50 | - |
| | NR 5 | - | - | - | - | - | - | - | - | - | - | - | - | 50 |
| | BR | 50 | 50 | 50 | 50 | 50 | 50 | 50 | 50 | 50 | 50 | 50 | 50 | 50 |
| | Carbon black | 40 | 40 | 40 | 40 | 40 | 40 | 40 | 40 | 40 | 40 | 40 | 40 | 40 |
| | Petroleum resin | 5 | 5 | 5 | 5 | 5 | 5 | 5 | 5 | 5 | 5 | 5 | 5 | 5 |
| | Wax | 1 | 1 | 1 | 1 | 1 | 1 | 1 | 1 | 1 | 1 | 1 | 1 | 1 |
| | Antioxidant 6C | 5 | 5 | 5 | 5 | 5 | 5 | 5 | 5 | 5 | 5 | 5 | 5 | 5 |
| | Antioxidant RD | 1 | 1 | 1 | 1 | 1 | 1 | 1 | 1 | 1 | 1 | 1 | 1 | 1 |
| | Stearic acid | 2 | 2 | 2 | 2 | 2 | 2 | 2 | 2 | 2 | 2 | 2 | 2 | 2 |
| | Zinc oxide | 4 | 4 | 4 | 4 | 4 | 4 | 4 | 4 | 4 | 4 | 4 | 4 | 4 |
| | Oil | 3 | 3 | 3 | 3 | 3 | 3 | 3 | 3 | 3 | 3 | 3 | 3 | 3 |
| | Sulfur | 2.5 | 2.5 | 2.5 | 2.5 | 2.5 | 2.5 | 2.5 | 2.5 | 2.5 | 2.5 | 2.5 | 2.5 | 2.5 |
| | Vulcanization accelerator | 1.0 | 1.0 | 1.0 | 1.0 | 1.0 | 1.0 | 1.0 | 1.0 | 1.0 | 1.0 | 1.0 | 1.0 | 1.0 |
| Evaluation | Odor component index of rubber composition | n.d. | n.d. | $4.0\times10^5$ | n.d. | n.d. | n.d. | $4.0\times10^5$ | $4.8\times10^5$ | $8.0\times10^6$ | $9.2\times10^6$ | $8.8\times10^6$ | $6.4\times10^5$ | $3.2\times10^6$ |
| | Odor component ratio (%) of rubber composition | n.d. | n.d. | 5 | n.d. | n.d. | n.d. | 5 | 6 | 100 | 115 | 110 | 8 | 40 |
| | Retention (%) of tensile strength at break of rubber composition | 90 | 100 | 75 | 70 | 90 | 100 | 70 | 75 | 50 | 40 | 45 | 80 | 60 |

As shown in the tables, good odor reduction and excellent degradation resistance were exhibited by the modified natural rubbers of the examples produced from (1) a solid raw material obtained from a natural rubber latex combined with an antiseptic disinfectant, and/or (2) a solid raw material obtained by adding an antiseptic disinfectant to a coagulum of a natural rubber latex, wherein the antiseptic disinfectant was at least one selected from the group consisting of triazines, parabens, boric acids, glycol ethers, and organic acids having a pKa of 4 or higher and metal salts thereof, as

well as by the rubber compositions containing the modified natural rubbers.

## Claims

1. A modified natural rubber, produced from at least one solid raw material selected from the group consisting of:

    (1) a solid raw material obtained from a natural rubber latex combined with an antiseptic disinfectant; and
    (2) a solid raw material obtained by adding an antiseptic disinfectant to a coagulum of a natural rubber latex, the antiseptic disinfectant being at least one selected from the group consisting of triazines, parabens, boric acids, glycol ethers, and organic acids having a pKa of 4 or higher and metal salts thereof.

2. The modified natural rubber according to claim 1,
wherein the antiseptic disinfectant is at least one selected from the group consisting of boric acids, glycol ethers, and organic acids having a pKa of 4 or higher and metal salts thereof.

3. The modified natural rubber according to claim 1 or 2,
wherein the antiseptic disinfectant is added in an amount of 0.01 to 10 parts by mass per 100 parts by mass of a rubber solid content of the natural rubber latex.

4. The modified natural rubber according to any one of claims 1 to 3,
wherein the modified natural rubber is produced by bringing the solid raw material into contact with a basic solution.

5. A rubber composition, comprising at least one rubber component including the modified natural rubber according to any one of claims 1 to 4.

6. The rubber composition according to claim 5,
wherein the rubber component further includes a polybutadiene rubber.

7. The rubber composition according to claim 5 or 6,
wherein the rubber composition has a filler content of 5 to 150 parts by mass per 100 parts by mass of a rubber component content.

8. The rubber composition according to any one of claims 5 to 7,
wherein the rubber composition has an odor component index of $5.0 \times 10^5$ or lower.

9. A tire, comprising a tire component comprising the rubber composition according to any one of claims 5 to 8.

## Amended claims under Art. 19.1 PCT

1. (Amended). A modified natural rubber, produced from at least one solid raw material selected from the group consisting of:

    (1) a solid raw material obtained from a natural rubber latex combined with an antiseptic disinfectant; and
    (2) a solid raw material obtained by adding an antiseptic disinfectant to a coagulum of a natural rubber latex,

        the antiseptic disinfectant being at least one selected from the group consisting of triazines, parabens, boric acids, glycol ethers, and organic acids having a pKa of 4 or higher and metal salts thereof,
        the glycol ethers being at least one selected from the group consisting of phenoxyethanol, phenoxypropanol, and phenoxyisopropanol.

2. The modified natural rubber according to claim 1,
wherein the antiseptic disinfectant is at least one selected from the group consisting of boric acids, glycol ethers, and organic acids having a pKa of 4 or higher and metal salts thereof.

3. The modified natural rubber according to claim 1 or 2,
wherein the antiseptic disinfectant is added in an amount of 0.01 to 10 parts by mass per 100 parts by mass of a

rubber solid content of the natural rubber latex.

**4.** The modified natural rubber according to any one of claims 1 to 3, wherein the modified natural rubber is produced by bringing the solid raw material into contact with a basic solution.

**5.** A rubber composition, comprising at least one rubber component including the modified natural rubber according to any one of claims 1 to 4.

**6.** The rubber composition according to claim 5, wherein the rubber component further includes a polybutadiene rubber.

**7.** The rubber composition according to claim 5 or 6, wherein the rubber composition has a filler content of 5 to 150 parts by mass per 100 parts by mass of a rubber component content.

**8.** The rubber composition according to any one of claims 5 to 7, wherein the rubber composition has an odor component index of $5.0 \times 10^5$ or lower.

**9.** A tire, comprising a tire component comprising the rubber composition according to any one of claims 5 to 8.

## INTERNATIONAL SEARCH REPORT

International application No.
PCT/JP2021/002051

A. CLASSIFICATION OF SUBJECT MATTER

C08C 1/00(2006.01)i; B60C 1/00(2006.01)i; C08K 3/013(2018.01)i; C08K 5/00(2006.01)i; C08L'7/02(2006.01)i; C08L 9/00(2006.01)i
FI: C08C1/00; C08L7/02; C08K3/013; B60C1/00 B; C08K5/00; C08L9/00

According to International Patent Classification (IPC) or to both national classification and IPC

B. FIELDS SEARCHED

Minimum documentation searched (classification system followed by classification symbols)
C08C1/00; B60C1/00; C08K3/013; C08K5/00; C08L7/02; C08L9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2005/012365 A1 (THAI RUBBER LATEX CORPORATION (THAILAND) PUBLIC COMPANY LIMITED) 10 February 2005 (2005-02-10) claims, page 4, line 21 to page 5, line 10, page 7, lines 2-4, examples 1-2 | 1-9 |
| X | JP 2009-256482 A (BRIDGESTONE CORPORATION) 05 November 2009 (2009-11-05) claims, paragraphs [0029]-[0030] | 1-2, 5-9 |
| X | WO 2010/074245 A1 (THE YOKOHAMA RUBBER CO., LTD.) 01 July 2010 (2010-07-01) claims, paragraphs [0029], [0032] | 1-3, 5-9 |
| X | JP 2007-284637 A (BRIDGESTONE CORPORATION) 01 November 2007 (2007-11-01) claims, paragraphs [0013], [0022]-[0024] | 1-3, 5-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 March 2021 (15.03.2021) | 23 March 2021 (23.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/002051

C (Continuation). DOCUMENTS CONSIDERED TO BE RELEVANT

| Category* | Citation of document, with indication, where appropriate, of the relevant passages | Relevant to claim No. |
|---|---|---|
| X | JP 2011-512429 A (CONTINENTAL REIFEN DEUTSCHLAND GMBH) 21 April 2011 (2011-04-21) claims, paragraph [0028] | 1-3, 5-9 |
| A | WO 2012/105681 A1 (BRIDGESTONE CORPORATION) 09 August 2012 (2012-08-09) | 1-9 |
| A | JP 60-238326 A (MANCHEM LIMITED) 27 November 1985 (1985-11-27) | 1-9 |
| A | JP 2007-291347 A (SUMITOMO RUBBER INDUSTRIES, LTD.) 08 November 2007 (2007-11-08) | 1-9 |
| A | JP 2015-199866 A (SUMITOMO RUBBER INDUSTRIES, LTD.) 12 November 2015 (2015-11-12) | 1-9 |
| A | JP 2018-058975 A (SUMITOMO RUBBER INDUSTRIES, LTD.) 12 April 2018 (2018-04-12) | 1-9 |
| A | JP 2018-199790 A (SUMITOMO RUBBER INDUSTRIES, LTD.) 20 December 2018 (2018-12-20) | 1-9 |
| A | JP 5364231 B2 (BRIDGESTONE CORPORATION) 11 December 2013 (2013-12-11) | 1-9 |
| P, A | JP 2020-090640 A (SUMITOMO RUBBER INDUSTRIES, LTD.) 11 June 2020 (2020-06-11) | 1-9 |

Form PCT/ISA/210 (continuation of second sheet) (January 2015)

**INTERNATIONAL SEARCH REPORT**
Information on patent family members

International application No.
PCT/JP2021/002051

| Patent Documents referred in the Report | Publication Date | Patent Family | Publication Date |
|---|---|---|---|
| WO 2005/012365 A1 | 10 Feb. 2005 | US 2006/0252879 A1 claims, paragraphs [0023]-[0025], [0038], examples 1-2<br>EP 1652862 A1<br>CN 1832967 A<br>AU 2003289424 A | |
| JP 2009-256482 A | 05 Nov. 2009 | (Family: none) | |
| WO 2010/074245 A1 | 01 Jul. 2010 | US 2011/0269881 A1 claims, paragraphs [0050], [0055]<br>CN 102264767 A | |
| JP 2007-284637 A | 01 Nov. 2007 | (Family: none) | |
| JP 2011-512429 A | 21 Apr. 2011 | US 2011/0086944 A1 claims, paragraph [0036]<br>WO 2009/098114 A1<br>EP 2242640 A1<br>CN 101970219 A | |
| WO 2012/105681 A1 | 09 Aug. 2012 | US 2013/0303686 A1<br>EP 2671913 A1<br>CN 103476849 A | |
| JP 60-238326 A | 27 Nov. 1985 | EP 148782 A1<br>US 4588766 A | |
| JP 2007-291347 A | 08 Nov. 2007 | US 2012/0065324 A1<br>EP 1840161 A1<br>CN 101067008 A | |
| JP 2015-199866 A | 12 Nov. 2015 | (Family: none) | |
| JP 2018-058975 A | 12 Apr. 2018 | (Family: none) | |
| JP 2018-199790 A | 20 Dec. 2018 | (Family: none) | |
| JP 5364231 B2 | 11 Dec. 2013 | (Family: none) | |
| JP 2020-090640 A | 11 Jun. 2020 | CN 111286087 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018058975 A
- JP 2018199790 A
- JP 5364231 B